# EUROPÄISCHE PATENTSCHRIFT

(11) **EP 2 399 333 B1**
(45) Veröffentlichungstag und Bekanntmachung des Hinweises auf die Patenterteilung: **20.04.2016**
(21) Anmeldenummer: 10700821.1
(22) Anmeldetag: 04.01.2010
(51) Int. Cl.: H02K 1/24, H02K 1/27

(54) **ROTORANORDNUNG FÜR EINEN ELEKTROMOTOR**
ROTOR ARRANGEMENT FOR AN ELECTRIC MOTOR
CONFIGURATION DE ROTORS POUR UN MOTEUR ÉLECTRIQUE

(30) Priorität: 20.02.2009 DE 102009001035
(43) Veröffentlichungstag der Anmeldung: 28.12.2011
(73) Patentinhaber: Robert Bosch GmbH, 70442 Stuttgart (DE)
(72) Erfinder: FEUERROHR, Lin, 77833 Ottersweier (DE)
(86) Internationale Anmeldenummer: PCT/EP2010/050001
(87) Internationale Veröffentlichungsnummer: WO 2010/094512

(56) Entgegenhaltungen:
- EP-A1- 1 223 658
- DE-A1-102007 024 406
- DE-U1- 20 303 580
- JP-A- 3 173 328
- US-A- 4 469 970
- US-A- 5 939 810

## Beschreibung

### Technisches Gebiet

Die Erfindung betrifft eine Rotoranordnung für einen Elektromotor.

### Stand der Technik

Bei elektrischen Antrieben können die Rotoranordnungen in Sammlerausführung oder Speichenausführung aufgebaut werden. Dies wird gemacht, um den Rotorbauraum möglichst gut auszunutzen und dadurch die Maschine kompakt (mit hoher Leistungsdichte) zu bauen. Bei dynamischen Antrieben ist dies besonders vorteilhaft, da Rotoren in Speichen- oder Sammleraufbau eine besonders geringe Trägheit haben können, z.B. als Lenkungsmotor, Schaltmotor, Kupplungssteller, Turboverdichter, etc.

Die US 5,939,810 eine Rotoranordnung eines Elektromotors gemäß des Oberbegriffs des Anspruchs 1 auf.

Sammleranordnungen und Speichenanordnungen sind im Stand der Technik bekannt. Es gibt zahlreiche Ausführungen, zum Beispiel solche mit komplett vergrabenen Magneten, wie in der Druckschrift FR 2 629 286 gezeigt. Zum Aufbau der Rotoranordnung sind Blechlagen gestanzter Bleche gestapelt. Alle Blechlagen sind dabei an der Welle angebunden. Es sind auch Anordnungen bekannt, deren Blechlagen nicht alle oder nur partiell an die Welle angebunden sind, zum Beispiel aus der Druckschrift DE 10 2007 024 406 A1 sowie der EP 1 223 658 A1. Letztere Anordnungen bezwecken, den Streufluss bzw. Leckfluss durch Weglassen von Verbindungsstegen zwischen Rotorzähnen und einem Nabenelement zu minimieren. Hier besteht jedoch die Gefahr, dass sich über die Lebensdauer ein einzelnes Blech löst, was zu einem Blockieren des Motors führen kann. Weiterhin können sich hierbei bei Verrutschen der Rotorzähne bzw. Rotorzahnelemente Polpositionen verschieben, was ungünstig für geringe Rastmomente ist.

Es ist daher Aufgabe der vorliegenden Erfindung, eine Rotoranordnung für einen Elektromotor zur Verfügung zu stellen, die geringe Flussverluste bei hoher Stabilität und geringe Toleranzempfindlichkeit ermöglicht.

### Offenbarung der Erfindung

Diese Aufgabe wird durch die Rotoranordnung nach Anspruch 1 gelöst.

Weitere vorteilhafte Ausgestaltungen der Erfindung sind in den abhängigen Ansprüchen angegeben.

Gemäß einem Aspekt ist eine Rotoranordnung für einen Elektromotor vorgesehen, die eine erste Blechlage aufweist, die ein Außenstegelement sowie ein erstes und ein zweites in tangentialer Richtung benachbartes Rotorzahnelement zur Anordnung um einen Wellenabschnitt aufweist. Zwischen dem ersten und zweiten Rotorzahnelement ist dabei eine Tasche, insbesondere zur Aufnahme eines ein Magnetfeld bereitstellenden Elementes, gebildet. Das Außenstegelement überspannt die Tasche, z.B. am Außenumfang der Rotoranordnung oder radial geringfügig unterhalb der Außenenden der ersten und zweiten Rotorzahnelemente, und verbindet somit das erste und zweite Rotorzahnelement der ersten Blechlage miteinander, in einem Bereich, der bezüglich der Tasche in radialer Richtung weiter außen liegt. Desweiteren weist die Rotoranordnung eine zweite Blechlage auf, die ein drittes und ein viertes in tangentialer Richtung angeordnetes Rotorzahnelement ohne Außenstegelement umfasst. Dabei sind die erste und zweite Blechlage zur Bildung der Rotoranordnung derart gestapelt, dass ein erster Rotorzahn das erste und das dritte Rotorzahnelement und ein zweiter Rotorzahn das zweite und das vierte Rotorzahnelement umfasst. Dabei weist die Rotoranordnung in der zweiten Blechlage ein Innenstegelement zwischen einem Rotorzahnelement der zweiten Blechlage und einem Nabenelement auf. Das Nabenelement ist dabei zur Aufnahme des Wellenabschnitts einer dort hindurch verlaufenden Welle ausgebildet. Zudem weist die erste Blechlage kein Innenstegelement auf. Folglich sind die Rotorzahnelemente der ersten Blechlage nicht einem Nabenelement verbunden. Hierbei wird insbesondere ein Streufluss vom magnetischen Nordpol zum magnetischen Südpol vermieden, der ansonsten über Innenstegelement und Nabenelement verläuft.

In einer weiteren vorteilhaften Ausführungsform kann vorgesehen sein, dass die erste Blechlage ein Innenstegelement aufweist, das ein Rotorzahnelement der ersten Blechlage mit dem Nabenelement verbindet.

Desweiteren wird eine Rotoranordnung vorgeschlagen, bei der die erste Blechlage jeweils ein Außenstegelement zwischen allen Rotorzahnelementen der ersten Blechlage aufweist, und wobei die zweite Blechlage jeweils ein Innenstegelement an allen Rotorzahnelementen der zweiten Blechlage aufweist, wobei die zweite Blechlage kein Außenstegelement aufweist. Somit können sich Blechlagen mit Außenstegelementen und Blechlagen mit Innenstegelementen abwechseln. Auf eine Blechlage maximaler Stabilität am Rotorzahnaußenumfang folgt somit beispielsweise eine Blechlage maximaler Stabilität am Rotorzahninnenumfang.

Gemäß einer Ausführungsform bilden Rotorzahnelemente der ersten Blechlage zusammen mit dem jeweils zwischen den Rotorzahnelementen liegenden Außenstegelement eine annähernd sinusförmige Konturlinie aus.

Es kann vorgesehen sein, dass eine erste Blechlage und eine zweite Blechlage mit tangentialem Versatz zueinander angeordnet ist, derart, dass erstes und drittes als auch zweites und viertes Rotorzahnelement zueinander jeweils einen Tangentialversatz innerhalb des durch sie bzw. mit diesen gebildeten Rotorzahnes aufweisen.

Weiterhin kann das Außenstegelement eine geringere Dicke aufweisen als ein damit verbundenes Rotorzahnelement. Das ist insbesondere vorteilhaft, um bei erhöhter Stabilität am Außenumfang der Rotoranordnung dennoch einen Streufluss am äußeren Umfangsrand in diesem Rotorzahnelement zu reduzieren.

Desweiteren ist ein Elektromotor mit einer obigen Rotoranordnung vorgesehen. Gemäß einem weiteren Aspekt wird ein Elektromotor mit einer obigen Rotoranordnung vorgeschlagen, bei dem zwischen zwei benachbarten Rotorzähnen Elemente zum Bereitstellen von Magnetfeldern angeordnet sind, die wechselnde Magnetpole liefern, wobei deren Magnetpole an Seitenflächen der Rotorzähne gekoppelt sind.

Schließlich ist auch ein Elektromotor vorgesehen, bei dem mindestens ein Rotorzahn vorgesehen ist, an dem in tangentialer Richtung lediglich an einer Seite ein ein Magnetfeld bereitstellendes Element zur Anlage gebracht ist. Durch Freilassen von Anlageflächen lässt sich eine Folgepolanordnung realisieren. Hierbei bilden sich die Rotorpole, die keine Magnete aufweisen, zwangsweise durch den magnetischen Rückschluss aus.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine perspektivische Darstellung eines Ausschnitts aus einer Rotoranordnung einer möglichen Ausführungsform der Erfindung;
Fig. 2 einen Ausschnitt aus einer zweiten Blechlage gemäß einer möglichen Ausführungsform der Erfindung;
Fig. 3 einen Ausschnitt aus einer ersten Blechlage gemäß einer möglichen Ausführungsform der Erfindung;
Fig. 4 einen Ausschnitt einer weiteren möglichen Ausführungsform einer ersten Blechlage;
Fig. 5 einen Ausschnitt einer weiteren möglichen Ausführungsform einer ersten Blechlage mit sinusförmiger Konturlinie;
Fig. 6 schematisch eine mögliche Ausführungsform zweier Rotorzähne mit Tangentialversatz in Draufsicht;
Fig. 7 einen Ausschnitt einer möglichen Ausführungsform einer ersten Blechlage, bei der die Außenstegelemente eine geringere Dicke als die Rotorzahnelemente aufweisen; und
Fig. 8 einen Ausschnitt einer möglichen Ausführungsform einer ersten Blechlage mit in Folgepolanordnung angeordneten Permanentmagneten.

In der nachfolgenden Beschreibung und den Zeichnungen entsprechen gleichen Bezugszeichen Elemente gleicher oder vergleichbarer Funktion.

### Beschreibung von Ausführungsformen

Der Begriff der Stapelung von Blechlamellen bzw. Blechlagen bezeichnet stets eine Stapelung in der Richtung einer Längsachse einer Rotorwelle des betrachteten Motors A bzw. einer Rotoranordnungsmittelachse A (um welche sich die Rotoranordnung bei Verwendung im Elektromotor im Betrieb dreht, im folgenden Mittelachse A), also in axialer Richtung. Die in der vorliegenden Anmeldung verwendeten Begriffe axial, radial und tangential beziehen sich sämtlich auf eine solche Wellenlängs- bzw. Mittelachse A, wobei der Begriff axial die Richtung der Wellenlängsachse bzw. Mittelachse A bezeichnet, der Begriff radial eine Senkrechte auf die Wellenlängsachse bzw. Mittelachse A und der Begriff tangential die Umfangsrichtung bzw. Drehrichtung in Bezug auf die Wellenlängs- bzw. Mittelachse A. Die Begriffe Außenumfang, außenumfangsseitig sowie Außenende beziehen sich auf Umfangsflächen und benachbarte Bereiche, die von den der Mittelachse A radial abgewandten Enden der z.B. Rotorzahnelemente, Rotorzähne und Außenstegelemente gebildet werden.

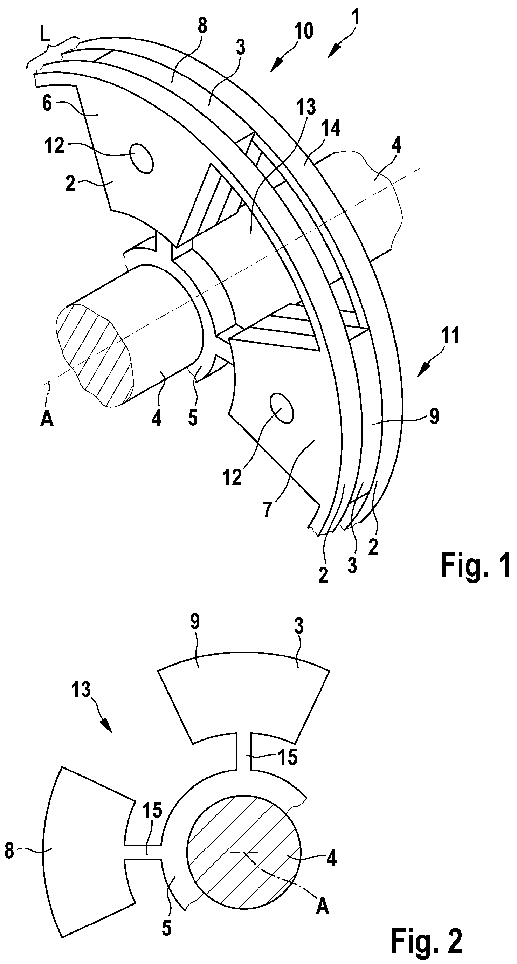

Fig. 1 zeigt perspektivisch einen Ausschnitt aus einer Rotoranordnung 1 für einen Elektromotor, wobei die Rotoranordnung 1 zur besseren Veranschaulichung um einen Wellenabschnitt 4 herum angeordnet ist, dessen Längsachse A zugleich eine Mittelachse A der Rotoranordnung 1 ausbildet. Die Rotoranordnung 1 ist im Elektromotor zur Drehung um diese Mittelachse A vorgesehen. Die Rotoranordnung 1 ist aus ersten und zweiten Lage(n) von Blechen 2, 3 bzw. Blechlamellen (im folgenden als Blechlagen bezeichnet) zusammengesetzt, die einen Stapel bilden. Die Blechlagen 2, 3 sind beispielsweise Blechlamellen für den Fall, dass sie nicht aus einzelnen Segmenten bestehen, also einstückig ausgebildet sind. Die Blechlagen sind beispielsweise als Stanzbleche ausgebildet, z.B. aus Elektroblech. Durch die Blechlagenstapelung wird eine Rotoranordnung 1 gebildet, die eine bestimmte Länge L aufweist. Die Blechlagen 2, 3 sind zur Anordnung um den Wellenabschnitt 4 mit der Mittelachse A herum vorgesehen, also in tangentialer Richung, und werden an diesem fixiert. Die Fixierung kann derart erfolgen, dass sämtliche Bleche oder nur einige und/oder beispielsweise nur Teile einzelner Blechlagen zum Beispiel mit einem Nabenelement 5 verbunden oder direkt an der Welle befestigt sind, z.B. durch einen Klemmsitz oder formschlüssig. Zumindest ist mindestens eine der Blechlagen 2, 3 an dem Wellenabschnitt 4 zur Befestigung vorgesehen.

Innerhalb jeder Blechlage 2 bzw. 3 sind Rotorzahnelemente 6, 7 bzw. 8, 9 ausgebildet. Die Rotorzahnelemente 6, 7, bzw. 8, 9, die innerhalb der jeweiligen Blechlage 2, 3 tangential bezüglich der Mittelachse A, also in Umfangsrichtung angeordnet sind, haben vorzugsweise die gleichen radialen Außenabmessungen, bilden also im Blechstapel miteinander im wesentlichen eine gemeinsame Außen- bzw. Umfangsfläche des Rotors bzw. erstrecken sich über dieselbe Entfernung von dem Wellenabschnitt 4 bzw. der Mittelachse A senkrecht bzw. radial zu diesem/dieser. Die Rotorzahnelemente 6, 7, 8, 9 bilden bei der Stapelung der Blechlagen 2, 3 entlang des Wellenabschnitts 4 Polzähne bzw. Rotorzähne 10, 11 der Rotoranordnung 1. Zur Stapelung sind in den Rotorzahnelementen 6, 7, 8, 9 beispielsweise miteinander kooperierende Strukturen 12 vorgesehen, die durch Zusammenwirken eine Fixierung der einzelnen Blechlagen 2, 3, aneinander ermöglichen, um so z.B. einem toleranzbedingten Verrutschen relativ zueinander, z.B. infolge der Fliehkrafteinwirkung beim Betrieb des damit gebildeten Elektromotors bzw. in Umfangsrichtung (tangentialer Richtung) entgegenzuwirken. Beispielsweise sind die Blechlagen mit Paketierpunkten bzw. mit einer Stanzpaketierung versehen. Als Alternative oder zusätzlich können die Blechlagen beispielsweise auch gelocht sein und miteinander in axialer Richtung verspannt oder verschraubt sein. Die Blechlagen können beispielsweise auch durch Kleben, Backlack oder ähnliches miteinander verbunden sein.

Zwischen jeweils zwei in tangentialer Richtung angeordneten Rotorzahnelementen 6, 7 und 8, 9 bzw. den durch die Stapelung gebildeten Rotorzähnen 10, 11 und/oder weiteren (nicht gezeigten) rotorzähnensind jeweils Taschen 13 gebildet. In diesen kann ein ein Magnetfeld bereitstellendes Element aufgenommen werden, wie z.B. die Wicklung eines Elektromagneten, die (im wesentlichen axial) dort hindurch verläuft. Je ein Permanentmagnet einer bestimmten Polung, z.B. Nord- oder Südpol, kann in die tangential zwischen den Rotorzahnelementen 6, 7 bzw. 8, 9 gebildeten Taschen 13, z.B. formschlüssig und sich im wesentlichen axial erstreckend eingesetzt werden, um so einzelne Magnetpole einer Rotoranordnung eines Elektromotors auszubilden. Auch können z.B. zwei Permanentmagnete unterschiedlicher Polung, also Nordpol und Südpol, in eine Tasche 13 eingesetzt werden. Die Taschen 13 können zur Aufnahme der die Magnetfelder bereitstellenden Elemente über Haltemechanismen, wie z.B. Vorsprünge oder Nasen verfügen (nicht dargestellt). In radialer Richtung erstrecken sich die Taschen 13 im wesentlichen über die Länge der Rotorzahnelemente 6, 7 bzw. 8, 9.

Neben den dargestellten und beschriebenen beispielhaften Rotoranordnungen 1 werden von der Erfindung dabei auch Rotoranordnungen 1 mit mehr als zwei Rotorzähnen 10, 11 und weiteren Rotorzahnelementen 6, 7, 8, 9, beispielsweise Rotoranordnungen mit zehn oder vierzehn Magnetpolen bzw. Rotorzahnelementen je Blechlage 2, 3 umfasst, wobei sich beispielsweise erste und zweite Rotorzähne 10, 11 in Umfangsrichtung bzw. tangential abwechseln.

Über die Rotorzähne 10, 11 wird der, z.B. von den Permanentmagneten erzeugte, zum Antrieb des Elektromotors nutzbare, magnetische Fluss radial nach außen geführt und tritt in die Umgebung aus. Da in dem Material der Blechlagen 2, 3 die Flussdichte höher ist als in Luft, ist eine Materialreduzierung im Sinne einer Querschnittsverringerung am Außenumfang der Rotoranordnung 1 zwischen den Rotorzähnen wünschenswert, um den Großteil des magnetischen Flusses in die Umgebung austreten lassen und somit nutzen zu können.

Der magnetische Fluss, der innerhalb der Rotoranordnung als Streu- bzw. Leckfluss insbesondere durch das Material der Haltestege bzw. Innenstegelemente und/oder der Wellenanbindung, z.B. das Nabenelement 5 verläuft, soll möglichst gering sein, da er zum Antrieb eines mit der Rotoranordnung 1 gebildeten Motors nicht beiträgt und somit einen unerwünschten Streuflussverlust darstellt.

Erfindungsgemäß enthält der erste Rotorzahn 10 ein erstes Rotorzahnelement 6 und ein drittes Rotorzahnelement 8, der zweite Rotorzahn 11 ein zweites Rotorzahnelement 7 und ein viertes Rotorzahnelement 9. Ein Außenstegelement 14 ist zwischen dem ersten 6 und dem zweiten 7 Rotorzahnelement angeordnet und überspannt die zwischen diesen Rotorzahnelementen 6, 7 gebildete Tasche 13. Das Außenstegelement 14 ist dabei in einem Bereich angeordnet, der hinsichtlich der Tasche 13 in radialer Richtung (bezüglich der Mittelachse A) weiter außen liegt. Das Außenstegelement 14 liegt folglich näher am Außenumfang der Rotoranordnung 1 als die Tasche 13. Infolge der Anordnung der ersten und zweiten Rotorzahnelemente 6 und 7 in Umfangsrichtung, leistet auch das Außenstegelement 14 eine Verbindung in tangentialer Richtung.

Das Außenstegelement 14 kann an den Außenenden bzw. am Außenumfang, der ersten und zweiten Rotorzahnelemente 6 und 7 eine Verbindung schaffen, kann jedoch auch in radialer Richtung beispielsweise etwas zur Mittelachse A hin versetzt angeordnet sein, derart, dass es von den Außenenden der Rotorzahnelemente 6, 7 in radialer Richtung überragt wird.

Mit dem Außenstegelement 14, das beispielsweise einstückig mit den Rotorzahnelementen 6 und 7 gebildet ist, existiert eine feste Verbindung zwischen dem ersten 10 und zweiten 11 Rotorzahn außenumfangsseitig, also zwischen in Umfangsrichtung tangential benachbarten Außenenden und/oder radial außen liegenden Bereichen der ersten 6 und zweiten 7 Rotorzahnelemente. Diese Verbindung fixiert die ersten und zweiten Rotorzahnelemente 6, 7 in ihrer Position relativ zueinander (tangential, radial) und wirkt somit einem späteren z.B. tangentialen und/oder fliehkraftbedingten radialem Verrutschen des damit verbundenen Rotorzahnelements bei einer Verwendung der Rotoranordnung 1 im Elektromotor entgegen. Durch die Fixierung können Rastmomente vermieden, zumindest aber minimiert werden, die bei Verrrutschen oder Verschieben der Rotorzahnelemente 6, 7 odr allgemein bei einer Positionsänderung eines Rotorzahnelementes bezüglich der gesamten Rotoranordnung 1 entstehen. Rastmomente führen zu schwankenden Drehmomenten und unruhigem Lauf aufgrund variierenden magnetischen Widerstands z.B. am Luftspalt. Rastmomente werden aufgrund einer hohen Positionstreue der Rotorzahnelemente 6, 7 durch die Außenstegelement-Verbindung vermieden.

Die Rotoranordnung 1 weist eine zweite Blechlage 3 mit einem dritten und vierten Rotorzahnelement 8, 9 auf. Dabei ist das dritte Rotorzahnelement 8 Teil des Rotorzahns 10, das vierte Rotorzahnelement 9 ist in Rotorzahn 11 enthalten. Zwischen dem dritten und vierten Rotorzahnelement 8, 9 gibt es keine Verbindung durch ein Außenstegelement 14. Der Materialquerschnitt ist im Bereich der Pollücke, zwischen den Rotorzahnelementen 8, 9 also, durch die fehlende Überbrückung reduziert. Es ergibt sich ein Abstand bzw. Luftspalt zwischen den Außenenden der Rotorzahnelemente 8, 9. Dadurch ist der magnetische Flussverlust am Außenende in dieser zweiten Blechlage 3 minimiert.

Vorzugsweise sind das erste 6 und das zweite 7 Rotorzahnelement direkt mit dem dritten 8 und vierten 9 Rotorzahnelement verbunden, z.B. über die kooperierenden Strukturen 12. Dabei wechseln sich über Außenstegelemente 14 verbundene Rotorzahnelemente 6, 7 axial mit außenumfangsseitig unverbundenen Rotorzahnelementen 8, 9 ab. Dadurch werden die dritten und vierten Rotorzahnelemente 8, 9 der zweiten Blechlage 3 von den ersten und zweiten Rotorzahnelementen 6, 7 der ersten Blechlage 2 radial und/oder tangential durch die außenumfangsseitige Außenstegverbindung 14 in Position gehalten bzw. stabilisiert, ein Verrutschen der ersten und dritten sowie der zweiten und vierten Rotorzahnelemente 6, 8 bzw. 7, 9 relativ zueinander wird vermieden. Gleichzeitig wird der Materialquerschnitt am Umfang der Rotoranordnung 1 durch Weglassen von Außenstegelementen 14 in der zweiten Blechlage 3 verringert und somit die Flussverluste. Vorzugsweise werden zur Bildung der Rotorzähne 10, 11 mehrere erste und dritte Rotorzahnelemente 6, 8 sowie mehrere zweite und vierte Rotorzahnelemente 7, 9 in abwechselnder Reihenfolge hintereinander bzw. axial gestapelt. Somit folgt auf eine Blechlage 2 mit Rotorzahnelementen 6,7, die einer hohen Positionstreue am Außenumfang eine Blechlage 3 mit minimierten Flussverlusten am Außenumfang dienen. Mit einem derartigen Rotorzahnaufbau ist folglich die Stabilität der Rotoranordnung 1 gegenüber einer Anordnung ohne Außenstegelemente 14 erhöht und gleichzeitig sind die Flussverluste beispielsweise im Vergleich mit einer Anordnung mit vollständig in der Tasche 13 vergrabenen Magneten geringer. Eine Anordnung ist beispielsweise vorteilhaft, bei der alle Rotorzähne der Rotoranordnung derart ausgebildet sind, dass auf einen ersten Rotorzahn 10 jeweils ein zweiter Rotorzahn 11 folgt.

Im gezeigten Ausführungsbeispiel gemäß Fig. 2 weist die zweite Blechlage 3 ein Innenstegelement 15 auf, das jeweils das dritte und/oder vierte Rotorzahnelement 8, 9 oder beliebige weitere Rotorzahnelemente der zweiten Blechlage 3 mit dem Nabenelement 5 verbindet. Das Nabenelement 5 ist dabei beispielsweise einstückig mit den Rotorzahnelementen 8, 9 und/oder den Innenstegelementen 15 gefertigt, z.B. durch Stanzung. Das Nabenelement 5 ist dazu vorgesehen, den Wellenabschnitt 4 zu umfassen, um die zweite Blechlage 3 daran zu fixieren. Das Innenstegelement 15 ist z.B. als im Querschnitt verjüngter Fortsatz des damit verbundenen Rotorzahnelements 8, 9 ausgebildet. Bei dieser Ausführungsform erstreckt sich die Tasche 13, die tangential zwischen den Rotorzahnelementen 8, 9 gebildet ist, im wesentlichen in einem Bereich, der radial jenseits des Innenstegelements 15 beginnt und sich zum Außenumfang hin erstreckt.

Durch Innenstegelement(e) 15 in Verbindung mit dem Nabenelement 5 besteht eine Materialverbindung zwischen benachbarten Magnetpolen, also Nord- und Südpolen. Durch diese Materialverbindung verläuft ein Anteil des magnetischen Flusses. Dieser durch das Nabenelement verlaufende magnetische Streufluss reduziert die Nutzbarkeit des magnetischen Flusses des eingesetzten Magnetmaterials in unerwünschter Weise.

Um diesen Streufluss gering zu halten, hat bei einer vorteilhaften Ausführungsform beispielsweise lediglich die zweite Blechlage 3 Innenstegelemente 15, nicht jedoch die erste Blechlage 2. Dadurch ist die Ausbildung des durch das Nabenelement 5 verlaufenden Streuflusses nur gering im Vergleich zu einer Ausführungsform, bei der sowohl erste als auch zweite Blechlagen 2, 3 über Innenstegelemente 15, also eine Wellenanbindung, verfügen. Bei dieser Ausführungsform sind die Rotorzahnelemente 6, 7 der ersten Blechlage 2 lediglich mit weiteren axial nachfolgenden und/oder vorhergehenden Rotorzahnelementen 8, 9, beispielsweise der zweiten Blechlage 3, verbunden und somit fixiert, nicht jedoch mit dem Nabenelement. Eine halterung der Rotorzahnelemente 6,7 an dem nabenelement 5 kann beispielsweise durch die miteinander kooperierenden Strukturen 12 erfolgen.

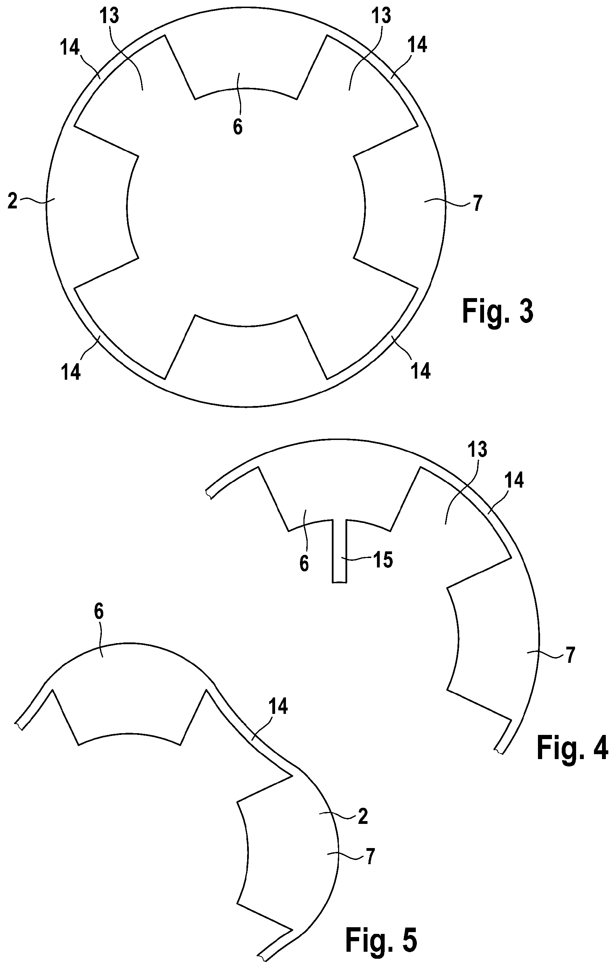

Eine weitere Ausführungsform sieht vor, dass sowohl die erste als auch die zweite Blechlage 2, 3 Innenstegelemente 15 aufweisen. Diese können, für den Fall, dass nicht jedes Rotorzahnelement 6, 7, 8, 9 einer jeden der ersten und zweiten Blechlage 2, 3 ein Innenstegelement aufweist, in Umfangsrichtung im Stapel zueinander versetzt sein. In diesem Fall folgt z.B. auf ein Rotorzahnelement 6 mit Innenstegelement 15 einer ersten Blechlage 2 in axialer Richtung ein Rotorzahnelement 9 der zweiten Blechlage 3 mit Innenstegelement, während Rotorzahnelemente 7 und 8 keine Innenstegelemente aufweisen. Dadurch wird hinsichtlich der ersten Blechlage (z.B. wie in Fig. 4 dargestellt) zusätzliche Positionstreue der Rotorzahnelemente durch die damit vorhandene Wellenanbindung geschaffen, während in der zweiten Blechlage 3 Innenstegverbindungen reduziert werden können.

Bei einer beispielhaften Ausführungsform einer erfindungsgemäßen Rotoranordnung 1 weist die erste Blechlage 2 keine Innenstegelemente 15 auf. An der ersten Blechlage 2 sind Außenstegelemente 14 zwischen den Rotorzahnelementen 6, 7 und allen weiteren Rotorzahnelementen der ersten Blechlage 2 ausgebildet (Fig. 3). Alle Rotorzahnelemente der ersten Blechlage 2 sind folglich durch Außenstegelemente 14 miteinander verbunden. Die zweite Blechlage 3 weist bei dieser Ausführungsform keine Außenstegelemente 14 auf. An den Rotorzahnelementen 8, 9 und vorzugsweise allen weiteren Rotorzahnelementen der zweiten Blechlage 3 sind Innenstegelemente 15 zur Wellenanbindung ausgebildet (Fig. 2). Bei wechselweisem Stapeln der derart ausgebildeten ersten und zweiten Blechlagen 2, 3 wird z.B. eine Rotoranordnung 1 realisiert, deren Streufluss über ein Nabenelement 5 nur in jeder zweiten Blechlage 3 den nutzbaren Magnetfluss verringert. Diese Rotoranordnung 1 liefert eine maximierte relative Positions- und Toleranzgenauigkeit am Aussenumfang durch umlaufende Außenstegelement-Verbindungen auch bei hohen Motordrehzahlen und reduziert Flussverluste am Außenumfang durch Weglassen von Außenstegelementen 14 in denjenigen Blechlagen 3, die die Innenstegelemente aufweisen. Durch die Innenstegelemente 15 wird dabei eine hohe Festigkeit der Rotoranordnung 1 erzielt.

Gemäß einer weiteren bevorzugten Ausführungsform einer Rotoranordnung 1 weist die erste Blechlage 2 tangential in Umfangsrichtung an ihrem Außenumfang beispielsweise eine annähernd sinusförmige Konturlinie, gebildet durch die radialen Außenenden der Rotorzahnelemente 6, 7 und die Außenstegelemente 14 auf (Fig. 5). Die Außenstegelemente können dabei in Kurvenform gebogen sein. Eine Annäherung an die Sinuskurvenform kann jedoch auch durch lediglich stabförmige Außenstegelemente 14 oder in anderer Weise erfolgen. Bei dieser Ausführungsform weisen zweckmäßigerweise auch damit zu verbindende bzw. verbundene Blechlagen, z.B. zweite Blechlagen 3, eine entsprechende Konturlinie auf. Bei Blechlagen ohne Außenstegelemente 14 ist z.B. nur die Rotorzahnelementkontur 8, 9 entsprechend ausgebildet.

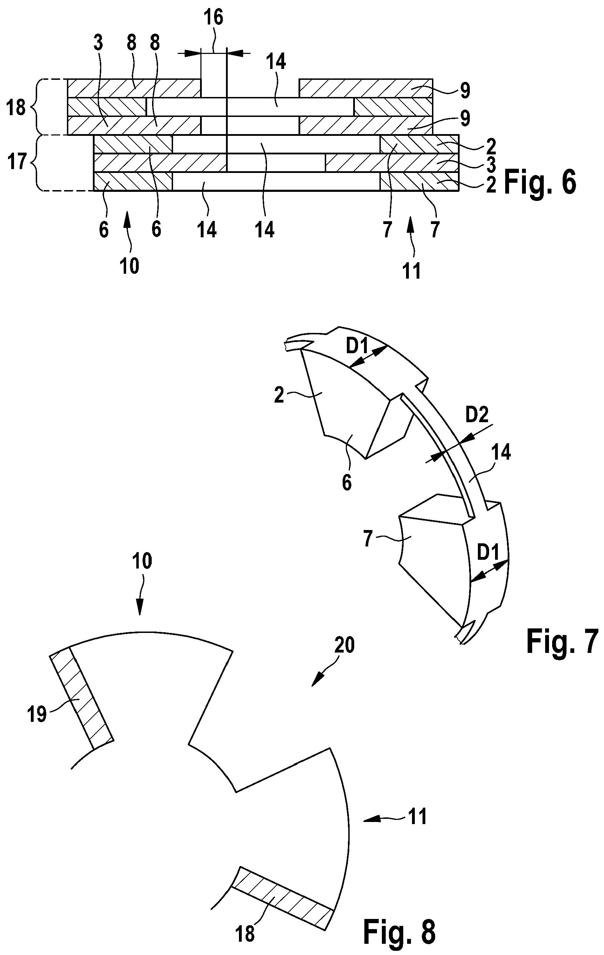

Bei einer weiteren Ausführungsform (Fig. 6) sind beispielsweise die erste Blechlage 2 und die zweite Blechlage 3 zur Bildung von Rotorzähnen 10, 11 mit tangentialem Versatz 16 zueinander angeordnet. Hierbei haben erstes 6 und zweites 7 Rotorzahnelement einen Versatz 16 in Umfangsrichtung gegenüber dem dritten 8 und vierten 9 Rotorzahnelement des jeweils selben durch sie bzw. mit ihnen gebildeten Rotorzahns 10, 11. Damit kann eine Rotoranordnung gebildet werden, die eine Schrägung durch Verdrehen von Rotorpaketen 17, 18 ermöglicht, bei dem also die ersten und zweiten Blechlagen als Pakete 17, 18 mit Versatz zueinander ausgebildet sind.

Bei einer weiteren vorteilhaften Ausführungsform ist die Materialstärke D2 bzw. Dicke D2 der Außenstegelemente 14 gegenüber der Materialstärke bzw. Dicke D1 der Rotorzahnelemente 6, 7 bzw. deren Blechstärke reduziert (Fig. 7). Dadurch ist der Materialquerschnitt des Außenstegelements 14 am Außenumfang weiter verringert. Bei gleichbleibend guter Verrutschsicherheit bzw. Toleranzgenauigkeit der Rotorzahnelemente 6, 7 ist der Flussverlust am Außenumfang nochmals reduziert.

Allgemein ist im Rahmen der Erfindung auch vorgesehen, dass Blechlagen, die verschiedene der oben beschriebenen Merkmale aufweisen, miteinander zur Bildung der Rotoranordnung 1 oder Rotorzähnen 10, 11 kombiniert werden. So ist z.B. auch vorgesehen, dass Blechlagen gleichen Typs hintereinander gestapelt werden, z.B. eine eeinfache oder mehrfache erste Blechlage 2 und eine einfache oder mehrfache zweite Blechlage 3. Das kann umgekehrt oder beispielsweise in anderen Verhältnissen erfolgen. Ferner ist, auch wenn lediglich Anordnungen zweier benachbarter Rotorzähne 6, 7, 8, 9 beschrieben sind, stets in Erwägung zu ziehen, dass sich mit deren Merkmalen auch Blechlagen mit mehr als zwei Rotorzähnen bilden lassen und Rotoranordnungen mit mehr als zwei Blechlagen.

Bei Verwendung der Rotoranordnung 1 in einem Elektromotor weist der Elektromotor z.B. Permanentmagnete wechselnder Polarität zwischen den Rotorzähnen 10, 11 auf. Der Rotor kann hierbei als Sammler mit schräg gestellten Magneten oder als Speichenrotor ausgebildet sein. Bei der Sammlerausführung sind zwischen zwei Rotorzähnen 10, 11 Nordpol und auch Südpol ausgebildet. Ansonsten liegt ein Magnetpol zwischen zwei Rotorzähnen 10, 11. Beispielsweise formschlüssig sich an die Seiten der Rotorzähne 10, 11 anschmiegende bzw. daran angekoppelte Permanentmagnete bilden dabei die Magnetpole.

Ferner ist auch eine Ausführungsform vorgesehen (Fig. 8), bei der Rotor und Magnete als Folgepolanordnung 20 ausgebildet sind. Hierbei ist zum Beispiel (in tangentialer Richtung) nur eine Seite eines Rotorzahns 10, 11 mit einem Magneten 18, 19 bzw. einem ein Magnetfeld bereitstellendem Element gekoppelt, derart, dass die tangential gegenüberliegende Seite desselben Rotorzahns nicht mit einem ein Magnetfeld bereitstellenden Element gekoppelt ist.

## Patentansprüche

1. Rotoranordnung (1), insbesondere für einen Innenläufer-Elektromotor, umfassend:
eine erste Blechlage (2), die ein Außenstegelement (14) sowie ein erstes (6) und ein zweites (7) in tangentialer Richtung der Rotoranordnung (1) benachbartes Rotorzahnelement zur Anordnung um einen Wellenabschnitt (4) aufweist,
wobei zwischen dem ersten (6) und zweiten (7) Rotorzahnelement eine Tasche (13), insbesondere zur Aufnahme eines ein Magnetfeld bereitstellenden Elementes, gebildet ist,
wobei das Außenstegelement (14) das erste (6) und zweite (7) Rotorzahnelement der ersten Blechlage (2) miteinander verbindet und bezüglich der Tasche (13) in radialer Richtung weiter außen angeordnet ist;
eine zweite Blechlage (3), die ein drittes (8) und ein viertes (9) in tangentialer Richtung benachbartes Rotorzahnelement ohne Außenstegelement (14) aufweist;
wobei die erste (2) und zweite (3) Blechlage zur Bildung der Rotoranordnung (1) derart gestapelt sind, dass ein erster Rotorzahn (10) das erste (6) und das dritte (8) Rotorzahnelement und ein zweiter Rotorzahn (11) das zweite (7) und das vierte (9) Rotorzahnelement umfasst,
wobei die zweite Blechlage (3) ein Innenstegelement (15) aufweist, das ein Rotorzahnelement (8, 9) der zweiten Blechlage (3) mit einem Nabenelement (5) verbindet, wobei das Nabenelement (5) zur Aufnahme des Wellenabschnitts (4) vorgesehen ist, wobei die erste Blechlage (2) kein Innenstegelement (15) aufweist, so dass die Rotorzahnelemente (6, 7) der ersten Blechlage (2) nicht mit dem Nabenelement (5) verbunden sind.

2. Rotoranordnung (1) nach Anspruch 1 , wobei die erste Blechlage (2) jeweils ein Außenstegelement (14) zwischen allen Rotorzahnelementen (6, 7) der ersten Blechlage (2) aufweist, und wobei die zweite Blechlage (3) jeweils ein Innenstegelement (15) an allen Rotorzahnelementen (8, 9) der zweiten Blechlage (3) aufweist, wobei die zweite Blechlage (3) kein Außenstegelement (14) aufweist.

3. Rotoranordnung (1) nach einem der Ansprüche 1 bis 2, wobei die Rotorzahnelemente (6, 7) der ersten Blechlage (2) zusammen mit dem Außenstegelement (14) eine annähernd sinusförmige Konturlinie ausbilden.

4. Rotoranordnung (1) nach einem der Ansprüche 1 bis 3, wobei eine erste Blechlage (2) und eine zweite Blechlage (3) mit tangentialem Versatz zueinander angeordnet ist, derart, dass erstes (6) und drittes (8) als auch zweites (7) und viertes (9) Rotorzahnelement zueinander jeweils einen Tangentialversatz innerhalb des durch sie gebildeten Rotorzahnes 10, 11 aufweisen.

5. Rotoranordnung nach einem der Ansprüche 1 bis 4, wobei das Außenstegelement (14) eine geringere Dicke aufweist als ein damit verbundenes Rotorzahnelement (6, 7).

6. Elektromotor mit einer Rotoranordnung (1) nach einem der Ansprüche 1 bis 5.

7. Elektromotor nach Anspruch 6 mit einer Rotoranordnung (1) nach einem der Ansprüche 1 bis 5, wobei zwischen zwei benachbarten Rotorzähnen (10, 11) Elemente zum Bereitstellen von Magnetfeldern angeordnet sind, die wechselnde Magnetpole liefern, wobei deren Magnetpole an Seitenflächen der Rotorzähne (10, 11) gekoppelt sind.

8. Elektromotor nach Anspruch 7, wobei mindestens ein Rotorzahn (10, 11) vorgesehen ist, an dem in tangentialer Richtung lediglich an einer Seite ein ein Magnetfeld bereitstellendes Element zur Anlage gebracht ist.

## Claims

1. Rotor arrangement (1), in particular for an internal-rotor electric motor, comprising:
a first sheet metal layer (2) which has an outer web element (14) and also a first rotor tooth element (6) and a second rotor tooth element (7), which rotor tooth elements are adjacent in the tangential direction of the rotor arrangement (1) and are intended to be arranged around a shaft section (4),
wherein a pocket (13), in particular for receiving an element which supplies a magnetic field, is formed between the first rotor tooth element (6) and the second rotor tooth element (7),
wherein the outer web element (14) connects the first rotor tooth element (6) and the second rotor tooth element (7) of the first sheet metal layer (2) to one another and is arranged further to the outside in the radial direction with respect to the pocket (13);
a second sheet metal layer (3) which has a third rotor tooth element (8) and a fourth rotor tooth element (9), which rotor tooth elements are adjacent in the tangential direction and do not have an outer web element (14);
wherein the first sheet metal layer (2) and the second sheet metal layer (3) which are intended to form the rotor arrangement (1) are stacked in such a way that a first rotor tooth (10) comprises the first rotor tooth element (6) and the third rotor tooth element (8), and a second rotor tooth (11) comprises the second rotor tooth element (7) and the fourth rotor tooth element (9),
wherein the second sheet metal layer (3) has an inner web element (15) which connects a rotor tooth element (8, 9) of the second sheet metal layer (3) to a hub element (5), wherein the hub element (5) is provided for receiving the shaft section (4), wherein the first sheet metal layer (2) does not have an inner web element (15), so that the rotor tooth elements (6, 7) of the first sheet metal layer (2) are not connected to the hub element (5).

2. Rotor arrangement (1) according to Claim 1, wherein the first sheet metal layer (2) has in each case one outer web element (14) between all of the rotor tooth elements (6, 7) of the first sheet metal layer (2), and wherein the second sheet metal layer (3) has in each case one inner web element (15) on all of the rotor tooth elements (8, 9) of the second sheet metal layer (3), wherein the second sheet metal layer (3) does not have an outer web element (14).

3. Rotor arrangement (1) according to one of Claims 1 and 2, wherein the rotor tooth elements (6, 7) of the first sheet metal layer (2), together with the outer web element (14), form an approximately sinusoidal contour line.

4. Rotor arrangement (1) according to one of Claims 1 to 3, wherein a first sheet metal layer (2) and a second sheet metal layer (3) are arranged with a tangential offset in relation to one another in such a way that the first rotor tooth element (6) and the third rotor tooth element (8) and also the second rotor tooth element (7) and the fourth rotor tooth element (9) in each case have a tangential offset in relation to one another within the rotor tooth (10, 11) which is formed by them.

5. Rotor arrangement according to one of Claims 1 to 4, wherein the outer web element (14) has a lower thickness than a rotor tooth element (6, 7) which is connected to it.

6. Electric motor having a rotor arrangement (1) according to one of Claims 1 to 5.

7. Electric motor according to Claim 6 having a rotor arrangement (1) according to one of Claims 1 to 5, wherein elements for supplying magnetic fields, which elements provide alternating magnetic poles, wherein the magnetic poles of the said elements are coupled to side faces of the rotor teeth (10, 11), are arranged between two adjacent rotor teeth (10, 11).

8. Electric motor according to Claim 7, wherein at least one rotor tooth (10, 11) is provided, an element which supplies a magnetic field being brought into contact with said rotor tooth only on one side in the tangential direction.

## Revendications

1. Arrangement rotor (1), notamment pour un moteur électrique à rotor interne, comprenant :
une première couche de tôle (2), qui possède un élément de membrure externe (14) ainsi qu'un premier (6) et un deuxième (7) élément de dent de rotor voisin de l'arrangement rotor (1) dans le sens tangentiel destiné à être disposé autour d'une portion d'arbre (4),
une poche (13), notamment destinée à accueillir un élément fournissant un champ magnétique, étant formée entre le premier (6) et le deuxième (7) élément de dent de rotor,
l'élément de membrure externe (14) reliant entre eux le premier (6) et le deuxième (7) élément de dent de rotor de la première couche de tôle (2) et étant disposé plus loin vers l'extérieur dans le sens radial par rapport à la poche (13) ;
une deuxième couche de tôle (3), qui possède un troisième (8) et un quatrième (9) élément de dent de rotor voisin dans le sens tangentiel sans élément de membrure externe (14) ;
la première (2) et la deuxième (3) couche de tôle étant empilées en vue de former l'arrangement rotor (1) de telle sorte qu'une première dent de rotor (10) englobe le premier (6) et le troisième (8) élément de dent de rotor et une deuxième dent de rotor (11) englobe le deuxième (7) et le quatrième (9) élément de dent de rotor,
la deuxième couche de tôle (3) possédant un élément de membrure interne (15) qui relie un élément de dent de rotor (8, 9) de la deuxième couche de tôle (3) avec un élément formant moyeu (5), l'élément formant moyeu (5) étant conçu pour accueillir la portion d'arbre (4), la première couche de tôle (2) ne possédant pas d'élément de membrure interne (15), de sorte que les éléments de dent de rotor (6, 7) de la première couche de tôle (2) ne sont pas reliés avec l'élément formant moyeu (5).

2. Arrangement rotor (1) selon la revendication 1, avec lequel la première couche de tôle (2) possède respectivement un élément de membrure externe (14) entre tous les éléments de dent de rotor (6, 7) de la première couche de tôle (2), et la deuxième couche de tôle (3) possède respectivement un élément de membrure interne (15) sur tous les éléments de dent de rotor (8, 9) de la deuxième couche de tôle (3), la deuxième couche de tôle (3) ne possédant pas d'élément de membrure externe (14).

3. Arrangement rotor (1) selon l'une des revendications 1 à 2, avec lequel les éléments de dent de rotor (6, 7) de la première couche de tôle (2) forment, conjointement avec l'élément de membrure externe (14), une ligne de contour approximativement sinusoïdale.

4. Arrangement rotor (1) selon l'une des revendications 1 à 3, avec lequel une première couche de tôle (2) et une deuxième couche de tôle (3) sont disposées avec un décalage tangentiel l'une par rapport à l'autre, de telle sorte que le premier (6) et le troisième (8) ainsi que le deuxième (7) et le quatrième (9) élément de dent de rotor présentent l'un par rapport à l'autre respectivement un décalage tangentiel à l'intérieur de la dent de rotor (10, 11) qu'ils forment.

5. Arrangement rotor selon l'une des revendications 1 à 4, avec lequel l'élément de membrure externe (14) présente une épaisseur inférieure à celle d'un élément de dent de rotor (6, 7) qui y est relié.

6. Moteur électrique comprenant un arrangement rotor (1) selon l'une des revendications 1 à 5.

7. Moteur électrique selon la revendication 6 comprenant un arrangement rotor (1) selon l'une des revendications 1 à 5, avec lequel des éléments destinés à fournir des champs magnétiques sont disposés entre deux dents de rotor (10, 11) voisines, lesquels délivrent des pôles magnétiques alternés, leurs pôles magnétiques étant couplés sur les surfaces latérales des dents de rotor (10, 11).

8. Moteur électrique selon la revendication 7, avec lequel il existe au moins une dent de rotor (10, 11) contre laquelle un élément fournissant un champ magnétique n'est appliqué que sur un côté dans le sens tangentiel.
